# EUROPEAN PATENT APPLICATION

(11) **EP 1 239 400 A1**
(43) Date of publication of application: **11.09.2002**
(21) Application number: 01400636.5
(22) Date of filing: 09.03.2001
(51) Int. Cl.: G06K 7/00

(54) **Dual smartcard controller**

(71) Applicant: Semiconductor Components Industries, LLC, Phoenix, Arizona 85008 (US)
(72) Inventor: Bairanzade, Michael, 31170 Tournefeuille (FR)
(74) Representative: Hirsz, Christopher Stanislaw

(57) **Abstract**

Dual smartcard controller (28) supplies independent power to smartcard readers (24, 26). An I/O data bus (MPU SELECT, MPU PROGRAM) allows MPU (12) control of dual smartcard controller (28) to obtain status and to provide programming features. MPU (12) provides a polling feature allowing the detection of a current overload condition (OVERLOAD) from power supply multiplexer (34) as well as a smartcard insertion detection (CARD PRESENT) from smartcard readers (24, 26). A current overload condition from one power supply internal to power supply multiplexer (34) does not render the second supply non-operational. A level shifting circuit (64) is employed to accommodate data I/O between two devices operating at different supply voltages.

## Description

### Background of the Invention

The present invention relates in general to smartcard reader controller circuits and, more particularly, to dual smartcard reader controller circuits with simultaneous, bi-directional Input/Output (I/O) data flow to multiple smartcard readers.

Smartcards are devices about the size of a credit card with an Integrated Circuit (IC) embedded within the smartcard. Data placed on the IC is read and/or updated by inserting the smartcard into a smartcard reader. Smartcards operate in either synchronous or asynchronous mode, depending upon the type of embedded IC. In some cases, smartcard readers provide a wireless interface to the smartcard, such that placing the smartcard within proximity of the smartcard reader enables a Radio Frequency (RF) interface internal to the smartcard to communicate with the smartcard reader.

The number of applications for smartcards is increasing rapidly and are proliferating into service oriented applications. Such service oriented applications include digital cash machines or Automatic Teller Machines (ATM's), set-top converters for Pay-Per-View (PPV) movies, railway access payment systems or prepaid telephone cards. Other applications may include data storage applications such as medical information storage for patients in possession of the smartcard or access control to buildings, computers or other secure areas.

Some service oriented applications of smartcards require two smartcards to be processed simultaneously. Such is the case, for example, with set-top converters for PPV movie activation and payment. Some hotels offer patrons the convenience of selecting, ordering and purchasing PPV movies at the set-top converter, all from within the hotel room. Such set-top converters, however, require two separate smartcards to be inserted into the set-top converter for simultaneous processing. A first smartcard is responsible for providing security access information about the patron and a second smartcard is responsible for providing the required payment for services rendered.

Prior art smartcard readers offering dual smartcard functionality, require two, dedicated smartcard interfaces and associated DC to DC converters to supply power to the smartcard interfaces. Requiring two dedicated smartcard interfaces and associated DC to DC converters increases the size and complexity of prior art smartcard readers.

Hence, there is a need for a smartcard controller capable of providing power and I/O to two smartcard readers simultaneously from a single smartcard reader controller.

### Brief Description of the Drawings

FIG. 1 is a block diagram illustrating a prior art smartcard interface circuit;
FIG. 2 is a block diagram illustrating an application of a dual smart card controller;
FIG. 3 is a block diagram of the dual smartcard controller of FIG. 2;
FIG. 4 illustrates the I/O interface of FIG. 3;
FIG. 5 illustrates a typical voltage shifting circuit;
FIG. 6 illustrates a typical DC to DC converter; and
FIG. 7 illustrates the regulation control of FIG. 6.

### Detailed Description of the Drawings

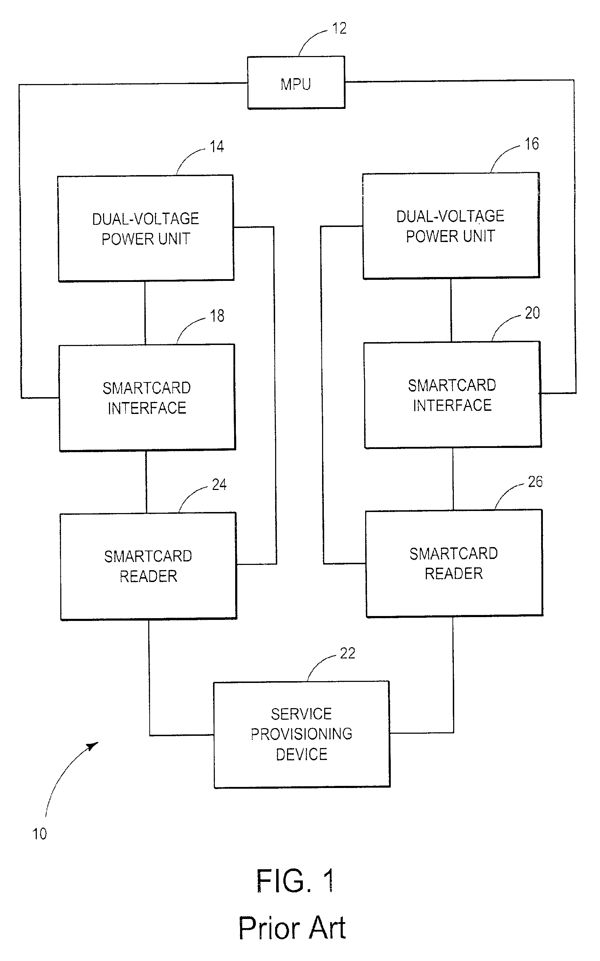

In FIG. 1, a prior art, dual smartcard interface 10 is illustrated. MPU 12 is coupled to smartcard interface 18 and 20 to provide a control Input/Output (I/O) interface. Dual-voltage power units 14 and 16 are coupled to smartcard interface circuits 18 and 20, respectively. Dual-voltage power units 14 and 16 typically provide either 1.8 volts, 3 volts or 5 volts to smartcard interfaces 18 and 20, respectively, depending upon external user selection. Smartcard readers 24 and 26 accept standard International Organization for Standardization (ISO) smartcards into card slots contained within smartcard readers 24 and 26. It should be noted that prior art, dual smartcard interface 10 requires dedicated smartcard interfaces 18 and 20 for smartcard readers 24 and 26, respectively. In addition, dual voltage power units 14 and 16 are required to provide supply voltage to smartcard readers 24 and 26 and associated smartcard interfaces 18 and 20.

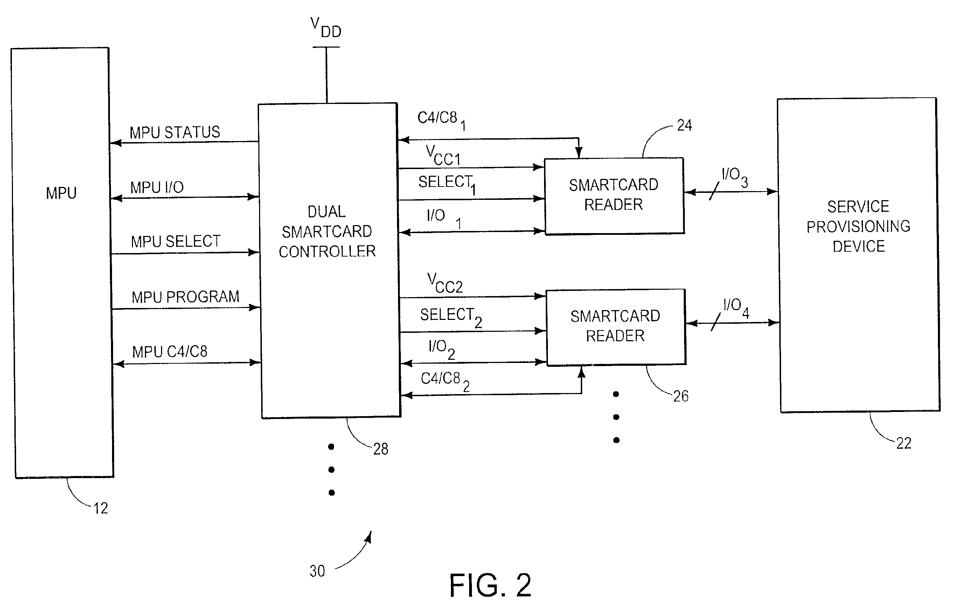

Turning to FIG. 2, an application 30 for an improved smartcard interface circuit is illustrated. It should be noted that whereas only two smartcard readers 24 and 26 are illustrated in FIG. 2, multiple pairs of smartcard readers are controllable by dual smartcard controllers 28 connected in parallel. Microprocessor Unit (MPU) 12 provides smartcard selection logic MPU SELECT and smartcard MPU I/O data to dual smart card controller 28. Dual smartcard controller 28 receives status information from smartcard readers 24 and 26 via I/O₁ and I/O₂ data lines, respectively, and reports smartcard reader status information to MPU 12 via the MPU STATUS data line. Additionally, interrupt driven status is received by MPU 12, wherein MPU 12 receives an interrupt signal (not shown) generated by dual smartcard controller 28 and subsequently provides a chip select to select a specific dual smartcard interface, within a bank of dual smartcard interfaces connected in parallel. Service provisioning device 22 receives and transmits information via data lines I/O₃ and I/O₄ to smartcard readers 24 and 26 respectively. As discussed earlier, service provisioning device 22 represents, for example, a PPV set-top conversion box for PPV movies. MPU PROGRAM is used by MPU 12, in conjunction with MPU SELECT and MPU I/O, to program the voltage value for supply voltages V_{CC1} and V_{CC2}, according to the power requirements of smartcard readers 24 and 26. Supply power is transferred to smartcard readers 24 and 26 via terminals V_{CC1} and V_{CC2}, respectively. It should be noted that MPU 12 and dual smartcard controller 28 provide two-way communication to smartcard readers 24 and 26 in order to ascertain the proper supply voltage magnitude as required by smartcard readers 24 and 26. Typical supply voltages required by smartcard readers 24 and 26 are, for example, 1.8 volts, 3 volts or 5 volts. Dual smartcard controller 28 receives supply voltage V_{dd} and provides regulated supply voltages V_{CC1} and V_{CC2} from supply voltage V_{dd} using dual voltage conversion devices contained within dual smartcard controller 28. Typical voltage ranges for supply voltage V_{dd} range from approximately 2.7 volts to approximately 6 volts. It can be seen, therefore, that dual smartcard controller 28, supplies Direct Current (DC) power to smartcard readers 24 and 26 in either buck or boost voltage converter fashion, depending upon the magnitude of V_{dd} and the supply voltage requirements of V_{CC1} and V_{CC2}. In other words, buck converter operation is automatically employed by dual smartcard controller 28 when supply voltage V_{dd} is at a supply potential greater than the supply voltage required by either smartcard reader 24 or 26. Conversely, boost converter operation is automatically employed by dual smart card controller 28 when supply voltage V_{dd} is less than the supply voltage required by either smartcard reader 24 or 26. It should be noted that supply voltages V_{CC1} and V_{CC2} are derived from supply voltage V_{dd} independently of each other. In other words, depending on the supply voltage requirements of smartcard reader 24 and 26 and the value of supply voltage V_{dd}, V_{CC1} and V_{CC2} are independently converted in any combination of buck or boost configurations. V_{CC1} is produced by a buck or boost voltage conversion operation while V_{CC2} is produced by a buck or boost operation, where V_{CC1} and V_{CC2} are converted independently of each other. Although only two smartcard readers 24 and 26 are illustrated, dual smartcard controllers 28 are added in parallel to handle any number of smartcard readers as required by the particular application. In addition, dual smart card controller 28 is suitable for IC implementations where the pin count for dual smart card controller 28 responsible for two smartcard readers 24 and 26 as shown in FIG. 2 is, for example, 42 pins.

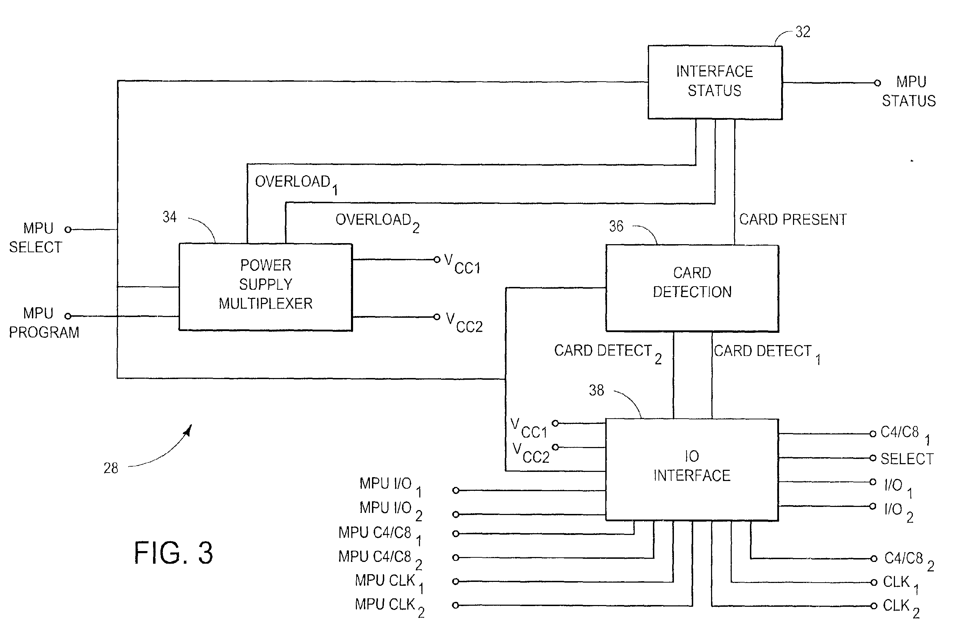

FIG. 3 illustrates a block diagram of dual smartcard controller 28. Power supply multiplexer 34 is coupled to receive MPU SELECT and MPU PROGRAM data from MPU 12. Power supply multiplexer 34 provides power supply potential at terminals V_{CC1} and V_{CC2} and overload condition logic signals at terminals OVERLOAD₁ and OVERLOAD₂. MPU SELECT data is coupled by interface status 32, card detection 36 and I/O interface 38. MPU STATUS data line is coupled to interface status 32. CARD PRESENT signal is coupled between card detection 36 and interface status 32. CARD DETECT₁ and CARD DETECT₂ signals are coupled between I/O interface 38 and card detection 36. SELECT₁, I/O₁, SELECT₂ and I/O₂ are coupled to I/O interface 38.

MPU SELECT represents a data bus configuration of six separate address, chip select and card select signals, A0, A1, A2, A3, CS and CARD_SEL from MPU 12, which are required to properly address dual smartcard controller 28. A0, A1, A2 and A3 are addressing lines used in conjunction with CARD_SEL, CS and MPU PROGRAM to set the mode of operation of dual smartcard controller 28, V_{CC1} and V_{CC2} supply voltage values and to read status provided by MPU STATUS.

In general, CARD_SEL is programmed to a logic zero to select one of smartcard readers 24 or 26, and programmed to a logic one when addressing the other smartcard reader. In both cases, CS is programmed to a logic low when any of these two cards is accessed. Programmed logic values for signals A0, A1, A2, A3 alternate between logic zero and logic one, depending upon the particular programming mode required. It is appreciated that the number of smartcard readers that are uniquely addressable is dependent upon the number of address signals implemented. For example, if only two smartcard readers are required, then a single CS and a single CARD_SEL signal are required. If four smartcard readers are required, then two CS signals are required, but a single CARD_SEL signal will be shared among the smart card interfaces. In general, "n" CS signals uniquely address 2ⁿ smartcard readers.

Smartcard readers 24 and 26 provide information regarding the presence of smartcards inserted into card slots internal to smartcard readers 24 and 26. Card detection signals are asserted by smartcard readers 24 and 26 and transmitted to dual smartcard controller 28 via the I/O₁ and I/O₂ signals, respectively. CARD DETECT₁ and CARD DETECT₂ signals are asserted by I/O interface 38 when smartcard readers 24 and 26, respectively, detect the insertion of a smartcard into the card slots contained within smartcard readers 24 and 26.

Power multiplexer 34 provides current overload status on data lines OVERLOAD₁ and OVERLOAD₂. As discussed earlier, power supply multiplexer 34 provides dual DC to DC conversion modules to convert input supply voltage V_{dd} to V_{CC1} and V_{CC2} supply voltages used by smartcard readers 24 and 26, respectively. If current signals, I_{CC1} and I_{CC2}, supplied to smartcard readers 24 and 26 via terminals V_{CC1} and V_{CC2}, respectively, exceed predetermined current threshold values, an over current condition will be reported by power supply multiplexer 34. Signal OVERLOAD₁ is asserted when I_{CC1} exceeds a predetermined amount and signal OVERLOAD₂ is asserted when I_{CC2} exceeds a predetermined amount. MPU 12 polls for status information using address signals A0 through A3 as discussed above, in combination with the MPU PROGRAM and CS signals. It should be noted that when V_{CC1} is in overload condition, V_{CC2} is still operational and when V_{CC2} is in overload condition, V_{CC1} is still operational.

The regulated output voltages, V_{CC1} and V_{CC2}, are set by MPU 12 according to the logic values of MPU SELECT and MPU PROGRAM. Table 1 provides example MPU SELECT and MPU PROGRAM bit selections for various combinations of example power supply output values. It should be noted that data signals Card_Sel, CS, A3, A2, A1 and A0 all combine to form data bus MPU SELECT.

**Table 1**

| **MPU Program** | **CS** | **Card_Sel** | **A3** | **A2** | **A1** | **A0** | **VCC1** | **VCC2** |
|---|---|---|---|---|---|---|---|---|
| 0 | 0 | 0 | 0 | 0 | 0 | 0 | 0 | N/A |
| 0 | 0 | 0 | 0 | 0 | 0 | 1 | 1.8V | N/A |
| 0 | 0 | 0 | 0 | 0 | 1 | 0 | 3.0V | N/A |
| 0 | 0 | 0 | 0 | 0 | 1 | 1 | 5.0V | N/A |
| 0 | 0 | 1 | 0 | 0 | 0 | 0 | N/A | 0 |
| 0 | 0 | 1 | 0 | 0 | 0 | 1 | N/A | 1.8V |
| 0 | 0 | 1 | 0 | 0 | 1 | 0 | N/A | 3V |
| 0 | 0 | 1 | 0 | 0 | 1 | 1 | N/A | 5V |

Dual smart card controller 28 in combination with MPU 12 provides a power management function which yields a minimum current consumption configuration for a given mode of operation. A first mode of operation for smartcard interface circuit 30 is stand-by mode. All interface pins connected to dual smartcard controller 28 are forced to ground potential during the stand-by mode of operation. Card detection 36 is the only block within dual smartcard controller 28 to receive supply potential during stand-by mode. A smartcard insertion into smartcard readers 24 or 26 initiates a power up sequence to occur. As discussed earlier, a card detection signal is transmitted by smartcard readers 24 and 26 when a smartcard is inserted. Terminal MPU STATUS will reflect the card insertion status, which will trigger MPU 12 to initiate the power up sequence. Additionally, a power up sequence is be initiated by MPU 12 during the start of a transaction, for example, at service provisioning device 22. The power up sequence causes the DC to DC converters within power supply multiplexer 34 to ramp supply voltages, V_{CC1} and V_{CC2}, to the programmed values. Once the DC to DC converters have started and V_{CC1} and V_{CC2} are stabilized, to 1.8, 3 or 5 volts for example, smartcard interface signals I/O₁, I/O₂, SELECT₁ and SELECT₂ are enabled, allowing full communication to occur between smartcard readers 24 and 26, dual smartcard controller 28 and MPU 12. Once a transaction has been completed or the smartcard has been removed from smartcard readers 24 and 26, dual smartcard controller 28 and smartcard readers 24 and 26 return to the stand-by mode.

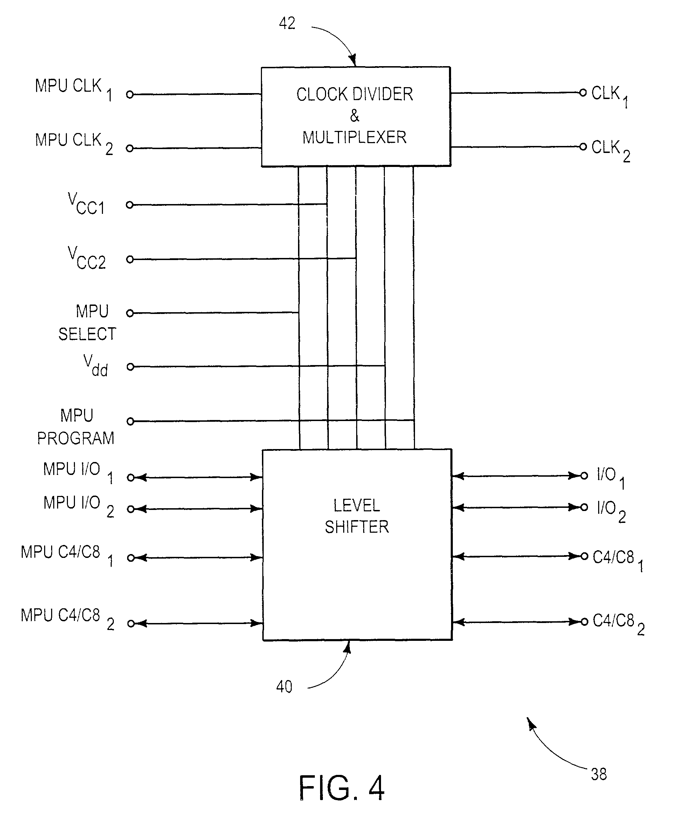

FIG. 4 illustrates I/O interface 38 of FIG. 3. Level shifter 40 receives bi-directional data signals MPU I/O₁, MPU I/O₂, MPU C4/C8₁ and MPU C4/C8₂. Bi-directional data signals I/O₁, I/O₂, C4/C8₁ and C4/C8₂ are provided by level shifter 40 to smartcard readers 24 and 26. Clock divider and multiplexer 42 receives MPU CLK₁ and MPU CLK₂ and provides CLK₁ and CLK₂ to smartcard readers 24 and 26. MPU SELECT and MPU PROGRAM signals are received by both clock divider and multiplexer 42 and level shifter 40. C4/C8 signals represent channel 4 and channel 8 data signals, respectively, associated with known smartcards that are devoid of MPU I/O lines. I/O interface 38 provides separate C4/C8 channels and separate MPU I/O channels to smartcard readers 24 and 26. In other words, older technology smartcards that do not provide an MPU interface are compatible with dual smartcard controller 28 due to the C4/C8 I/O interface provided. An important feature of I/O interface 38 is therefore provided such that a wide variety of smartcards are rendered compatible with smartcard interface circuit 30, including but not limited to MPU programmable smartcards and on-board memory smartcards.

In operation, I/O interface 38 provides level shifter 40 to accommodate the voltage potential difference between the supply voltage utilized by MPU 12, V_{dd}, and the supply potentials utilized by smartcard readers 24 and 26. As discussed earlier, V_{dd} varies between approximately 2.7 volts and 6 volts, whereas the supply voltages for smartcard readers 24 and 26 are regulated to 1.8, 3, or 5 volts, for example. The difference in logic supply voltages creates a significant logic high voltage difference between MPU 12 operating at 2.7 volts, for example, and smartcard reader 24 operating at 5 volts, for example. The logic high voltage difference is therefore 2.3 volts and must be normalized to prevent data error transmission. Level shifter circuit 40 provides the necessary level shifting required between MPU 12 and smartcard readers 24 and 26. I/O interface 38 additionally provides clock division and multiplexing. Clock divider and multiplexer 42 receives MPUCLK₁ and MPUCLK₂ signals. The MPUCLK₁ and MPUCLK₂ signals are either generated within MPU 12 or are generated by a suitable external source (not shown). Clock divider and multiplexer 42 provides independent frequency division of clock signals MPUCLK₁ and MPUCLK₂ to provide clock signals CLK₁ and CLK₂, where clock signals CLK₁ and CLK₂ are divided by the programmable divisors according to Table 2.

**Table 2**

| **MPU Program** | **Card Select** | **A3** | **A2** | **A1** | **A0** | **CLK1** | **CLK2** |
|---|---|---|---|---|---|---|---|
| 0 | 0 | 0 | 1 | 0 | 0 | MPUCLK1/1 | N/A |
| 0 | 0 | 0 | 1 | 0 | 1 | MPUCLK1/2 | N/A |
| 0 | 0 | 0 | 1 | 1 | 0 | MPUCLK1/4 | N/A |
| 0 | 0 | 0 | 1 | 1 | 1 | MPUCLK1/8 | N/A |
| 0 | 1 | 0 | 1 | 0 | 0 | N/A | MPUCLK2/1 |
| 0 | 1 | 0 | 1 | 0 | 1 | N/A | MPUCLK2/2 |
| 0 | 1 | 0 | 1 | 1 | 0 | N/A | MPUCLK2/4 |
| 0 | 1 | 0 | 1 | 1 | 1 | N/A | MPUCLK2/8 |

As discussed earlier, signal MPU SELECT comprises signals CS, Card_Sel, A3, A2, A1 and A0. Individually programmable clock divider and multiplexer circuit 42 provides an extra degree of freedom in the determination of smartcard types that are introduced into the smartcard slot of smartcard readers 24 and 26. Clock divider and multiplexer 42 additionally implements a level shifting operation identical to level shifter 40 as discussed earlier. A unique operation of clock divider and multiplexer 42 is that MPUCLK₁ and MPUCLK₂ is supplied to CLK₁ and CLK₂ terminals for every combination possible. In other words, MPUCLK₁ and MPUCLK₂ are routed to either CLK1 and CLK2 terminals independently.

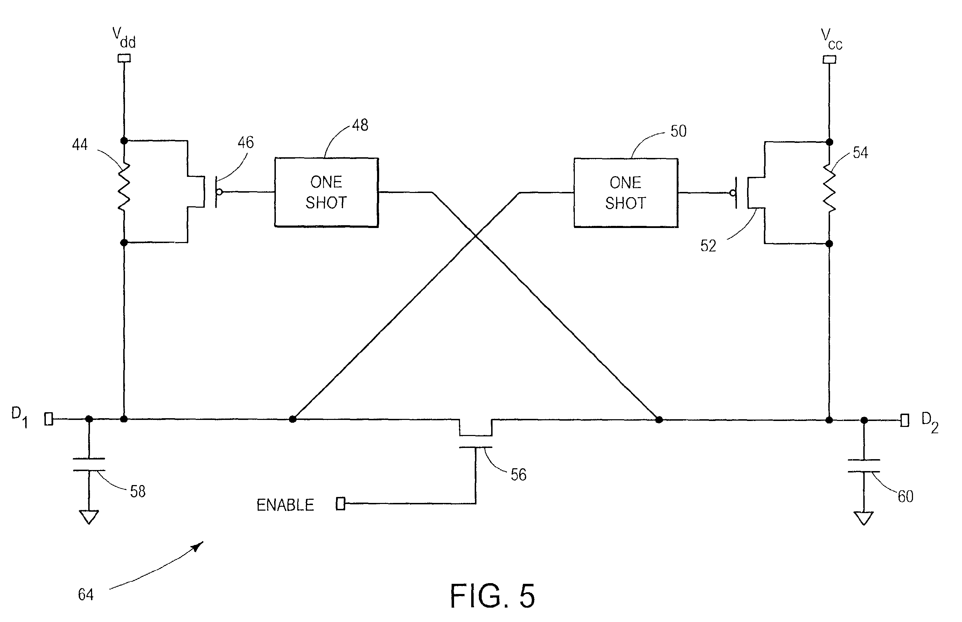

FIG. 5 illustrates a typical level shifting circuit 64 utilized by either level shifter 40, clock divider and multiplexer 42 or any other I/O connecting MPU 12 with smartcard readers 24 and 26. A first conductor of transistor 56 is coupled to node D₁ and a second conductor of transistor 56 is coupled to node D₂. A control terminal of transistor 56 is coupled to node ENABLE. A first conductor of resistor 44 and transistor 46 is coupled to node D₁ and a second conductor of resistor 44 and transistor 46 is coupled to V_{dd}. A control terminal of transistor 46 is coupled to a first conductor of one shot 48 and a second conductor of one shot 48 is cross-coupled to node D₂. A first conductor of resistor 54 and transistor 52 is coupled to node D₂ and a second conductor of resistor 54 and transistor 52 is coupled to V_{CC}. A control terminal of transistor 52 is coupled to a first conductor of one shot 50 and a second conductor of one shot 48 is cross-coupled to node D₁.

In operation, level shifter 64 operates with supply potential V_{dd} varying between 2.7 volts and 6 volts, for example, and supply potential V_{CC} equal to 1.8, 3 or 5 volts, for example. Any I/O line of MPU 12, for example, is connected to node D1 and the corresponding I/O line for smartcard reader 24 or 26 is connected to node D₂. Level shifter 64 shifts logic levels transitioning from 0 volts to 5 volts, for example, at node D₁ to logic levels transitioning from 0 volts to 1.8 volts, for example, at node D₂.

Signal ENABLE, provided by MPU 12, is at a logic high in order to make transistor 56 conductive, allowing a conduction path to exist between node D₁ and D₂. Transmission speeds, however, are hampered by stray capacitance on the transmission line. Stray capacitors, 58 and 60, are coupled from node D₁ and node D₂ to ground, respectively. Capacitance values for capacitors 58 and 60 are, for example, approximately 30 picofarad (pf). Normal logic values on nodes D₁ and D₂ are equal to V_{dd} and V_{CC}, respectively, due to the operation of pull up resistors 44 and 54.

A logic zero is placed on node D₁ by MPU 12, for example, which causes terminal D₂ to be pulled to ground as well. The line pulls down rapidly, since stray capacitors 58 and 60 are discharged rapidly by the interface transistors (not shown) connected to nodes D₁ and D₂. As MPU 12, for example, pulls node D₁ back to a logic high level, a time constant given by resistors 44 and 54 and capacitors 58 and 60 in parallel with each other, limits the speed at which capacitors 58 and 60 charge to their respective logic high voltage values. Given that resistors 44 and 54 range between 14 kilohm and 20 kilohm, the time constant is on the order of 1 microsecond.

One shots 48 and 50 are employed to speed the low to high logic transition on nodes D₁ and D₂. As the voltage at node D₁ rises to the trigger level of one shot 48, the output of one shot 50 triggers to a logic low, making transistor 52 conductive. Once transistor 52 is conductive, resistor 54 is substantially shorted. One shot 48 triggers at substantially the same time as one shot 50 which renders transistor 46 conductive, shorting resistor 44. The only resistance remaining are the on-resistances of transistors 46 and 52 in parallel with capacitors 58 and 60. The time constant is substantially decreased, thereby increasing the speed at which a logic low to logic high transition is placed at terminals D₁ and D₂. Typical transmission speeds that are realized by level shifter 64 are approximately 250 kilobytes per second.

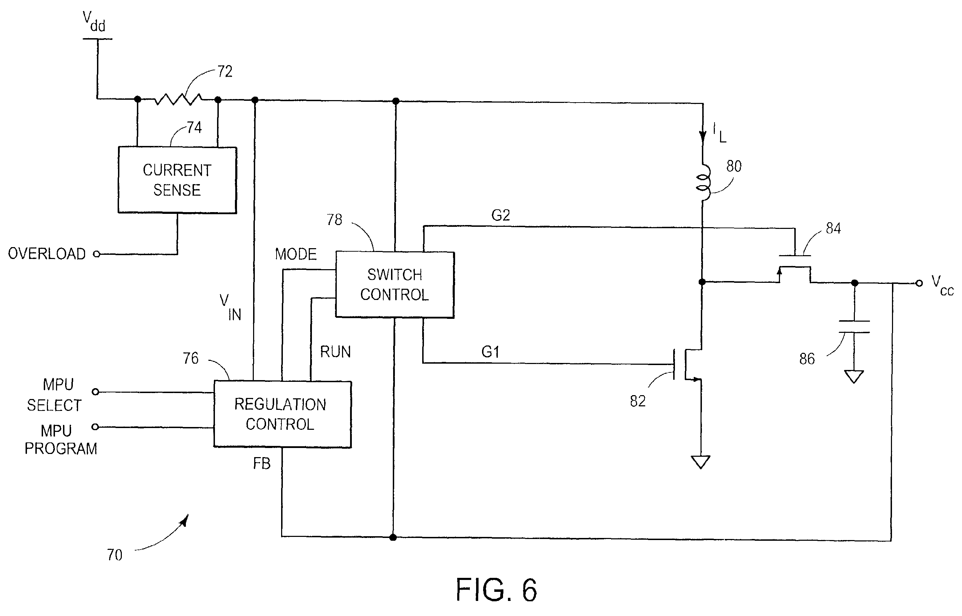

FIG. 6 illustrates a typical DC to DC converter 70 utilized by power supply multiplexer 34. It should be noted that power supply multiplexer 34 comprises dual DC to DC converters, each of which are exemplified by the circuit of FIG. 6. Metal Oxide Semiconductor Field Effect Transistors (MOSFET) 82 and 84, in conjunction with inductor 80 and associated regulation control circuits produce a regulated voltage at terminal V_{CC}. In general, converter 70 regulates the output voltage V_{CC} to a substantially constant voltage level, while accepting the input voltage V_{dd} from a battery. V_{CC} is either regulated to a potential lower than the battery voltage, referred to as down conversion, or is regulated to a potential higher than the battery voltage, referred to as up conversion.

In operation, converter 70 accepts an input voltage from a battery at node V_{dd}. The battery voltage is typically in the range of approximately 2.7 volts to 6 volts. The output voltage, V_{CC}, is regulated to, for example, 5 volts. Converter 70 will be in up-conversion mode for battery voltage, V_{dd}, less than 5 volts. Converter 70 will be in down-conversion mode for battery voltage, V_{dd}, greater than 5 volts. Regulation control 76 receives control signals MPU SELECT and MPU PROGRAM to program the output voltage as provided by Table 1. It should be noted that terminal V_{CC} of FIG. 6 correlates to either V_{CC1} or V_{CC2} of Table 1.

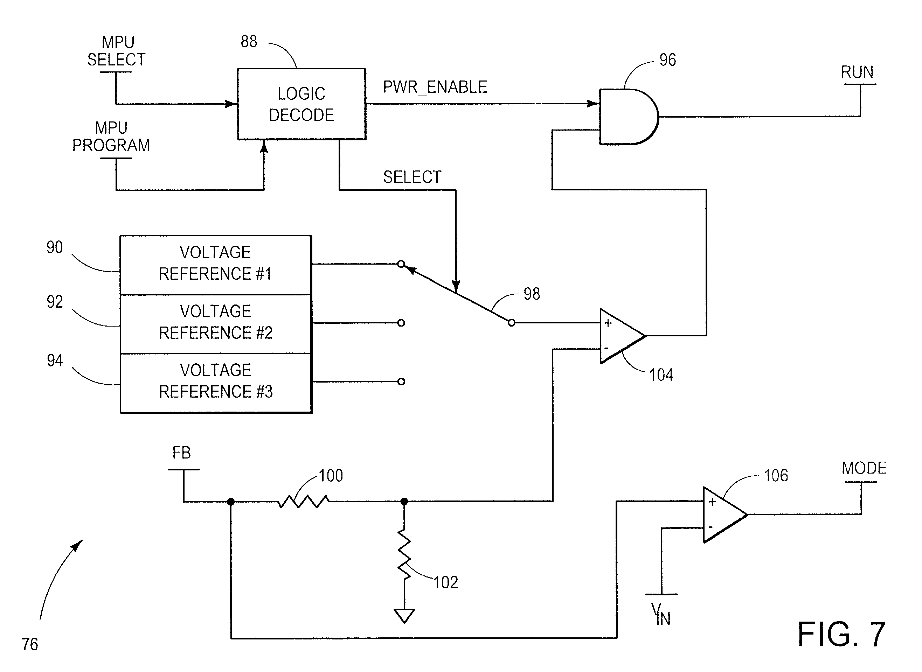

FIG. 7 illustrates a schematic diagram of regulation control 76. Regulation control 76 accepts MPU SELECT and MPU PROGRAM data and operates to provide either a 1.8, 3 or 5 volt to the non-inverting input of comparator 104. Regulation control 76, therefore, selects between one of three reference voltages and regulates the output voltage, V_{CC}, to one of three reference voltages accordingly. Logic decode 88 decodes the MPU SELECT and MPU PROGRAM data bits to assert signal SELECT such that either voltage reference #1, 1.8 volt reference for example, voltage reference #2, 3 volt reference for example, or voltage reference #3, 5 volt reference for example, is provided to the non-inverting input of comparator 104.

Comparator 106 detects the potential relationship between V_{IN} and V_{FB}, and asserts signal MODE accordingly. Comparator 106 receives the output voltage, V_{FB}, at the non-inverting input, from terminal V_{CC}. Comparator 106 receives the input voltage at the inverting input from terminal V_{IN}. Signal MODE is at a logic high, indicating up conversion mode, when V_{IN} is less than V_{FB}. Signal MODE is at a logic low, indicating down conversion mode, when V_{IN} is greater than V_{FB}. Comparator 106 has an input offset voltage, which is required to assure continuous function of converter 76 when V_{IN} and V_{FB} are approximately at the same potential. Additionally, comparator 106 has built in hysteresis, which prevents converter 76 from oscillating between up conversion and down conversion modes. Regulation control 76 additionally provides a method to disable DC to DC converter 70 under the control of MPU 12 by allowing MPU 12 to program the PWR_ENABLE signal, via logic decode 88, to a logic low value, thereby de-asserting signal RUN.

Down conversion mode of converter 70 exists when the battery voltage, V_{dd}, is at a higher potential than V_{CC}. Internal circuitry to switch control 78, determines the maximum of the two voltages, V_{dd} or V_{CC}, and provides the maximum voltage as logic high levels to the control terminals of transistors 82 and 84. At startup, V_{CC} is at ground potential and V_{dd} is at, for example, 6 volts. Comparator 106 sets the conversion mode to down conversion by appropriate selection of signal MODE. NMOS transistor 82 does not enter into a conductive state while converter 70 is in down conversion mode. PMOS transistor 84 is rendered conductive by switch control 78, by setting signal G2 to a logic low. The voltage present at the source terminal of PMOS transistor 84 exceeds the threshold voltage of PMOS transistor 84 making PMOS transistor 84 conductive. Current is conducted by inductor 80, through sense resistor 72 and PMOS transistor 84, to charge capacitor 86. Initially, the inductor current, I_{L}, is zero and begins to vary according to the applied voltage V_{L} across the inductor. The change in inductor current, di/dt, starts to increase as di/dt=V_{L}/L, where L is the value of inductance associated with inductor 80 and di/dt is the rate of change of current flow through inductor 80. The applied voltage across inductor 80 is approximately equal to V_{L}=V_{dd}-V_{CC}-V₇₂-V₈₄, where V₇₂ and V₈₄ are voltages developed across sense resistor 72 and PMOS switch 84, respectively. Capacitor 86 is relatively large , for example, 3.3uF, so the variation of V_{CC} during one cycle of inductor current is negligible. Current sense 74 senses the current flow through resistor 72, which is equivalent to the current flow through inductor 80, and at a predetermined amount of current flow, Iₘₐₓ. detects a maximum current value. Once Iₘₐₓ is detected by current sense 74, signal OVERLOAD is asserted by current sense 74, indicating that the predetermined maximum inductor current, Iₘₐₓ, is obtained. Signal OVERLOAD is thereby ready to be sampled during the polling sequence of MPU 12, as discussed earlier. It should be noted that power supply multiplexer 34 provides dual power converters, each having overcurrent protection. If one of the power converters transitions to an overcurrent mode, the other power converter is still operational. In other words, the failure of one DC to DC converter within power supply multiplexer 34 does not adversely affect the other.

Since converter 70 is in a down-conversion mode, V_{CC} is regulated to some potential below V_{dd}. Converter 70, for example, regulates from voltage V_{dd} approximately equal to 6 volts to voltage V_{CC} approximately equal to 5 volts, for example. Once the output voltage V_{CC} has reached the predetermined output voltage of 5 volts, for example, converter 70 changes to a skip mode of operation. Skip mode of operation is defined to be a mode of operation whereby no current is conducted by inductor 80 and the inductor current, I_{L}, falls to 0 amps. The energy stored in capacitor 86 supplies power to the load (not shown) connected to node V_{CC}. The skip mode of operation is set by regulation control 76, via signal RUN, when V_{CC} has obtained a predetermined voltage value, set by voltage reference #1, voltage reference #2 or voltage reference #3.

As discussed above, V_{dd} is a voltage supply potential derived from a battery. The magnitude of V_{dd} will decrease as the amount of charge contained within the battery decreases. As the magnitude of V_{dd} decreases below the voltage required at terminal V_{CC}, comparator 106 changes conversion mode of converter 70 from down-conversion to up-conversion, through appropriate selection of signal MODE. Internal circuitry to switch control 78 determines V_{CC} is the maximum voltage as compared to V_{dd} and asserts signals G1 and G2 with logic high voltage levels equal to V_{CC}, as opposed to V_{dd}, accordingly.

Up-conversion mode engages both NMOS transistor 82 and PMOS transistor 84. At startup, V_{CC} is at ground potential and V_{dd} is at, for example, 3 volts. Since V_{CC} is at a potential lower than V_{dd}, converter 70 is in down-conversion mode. The voltage at V_{CC} increases as described earlier for down-conversion mode at start up. As the output voltage at node V_{CC} increases to a voltage approximately equal to V_{dd}, the conversion mode reverses from down-conversion mode to up-conversion mode. Regulation control 76 maintains the RUN signal to a logic high value, since the output voltage has not yet reached the predetermined value of, for example, 5 volts. As converter 70 transitions from down to up-conversion mode, the voltage at terminal V_{CC} approximates V_{dd}. Signals G1 and G2 are asserted to a logic high, or V_{CC}, rendering NMOS transistor 82 conductive and PMOS transistor 84 non-conductive. Inductor 80 continues to store magnetic energy as the inductor current continues to increase. NMOS transistor 82 conducts the inductor current until the inductor current reaches Iₘₐₓ. Once the inductor current reaches Iₘₐₓ, NMOS transistor 82 is rendered non-conductive by switch control 78 by de-asserting signal G1 to a logic low value and PMOS transistor 84 is rendered conductive by de-asserting signal G2 to a logic low value. The voltage developed across inductor 80 inverts, maintaining a source voltage at PMOS transistor 84 which exceeds the threshold voltage of PMOS transistor 84. Since PMOS transistor 84 is conductive, inductor 80 continues to supply drive current to charge capacitor 86. The voltage across capacitor 86, V_{CC}, continues to increase toward the predetermined value set by regulation control 76, for example, 5 volts. Once the output voltage has reached 5 volts, regulation control 76 de-asserts signal RUN, programming converter 70 to a skip mode of operation, whereby no current is conducted by either NMOS transistor 82 or PMOS transistor 84. The energy stored in capacitor 86 delivers the required power to the load connected to node V_{CC}. Once the voltage at node V_{CC} has transitioned below a predetermined value set by regulation control 76, signal RUN is asserted by regulation control 76 and power conversion resumes.

Over-current protection is provided by converter 70, in conjunction with MPU 12. If the current sensed by current sense 74 increases past a predetermined amount, signal OVERLOAD is asserted and is sampled during the next polling stage of MPU 12. MPU 12 stops the operation of converter 70 by appropriate MPU SELECT and MPU PROGRAM data selection, which in turn causes signal RUN to be de-asserted, as discussed earlier.

By now, it is appreciated that a dual smartcard controller 58 has been presented that allows simultaneous control of more than one smartcard reader. In addition to I/O control, dual smartcard controller 58 provides integrated DC to DC power conversion, eliminating the need for external DC to DC power converters. Dual smartcard controller 58 therefore provides a unique, integrated smartcard controller solution decreasing size, complexity and cost.

## Claims

1. A smartcard controller, comprising:
a power conversion circuit (34)having an input coupled to receive a supply potential at a first level and having first and second outputs coupled to provide first and second regulated supply potentials at second and third levels independent of the supply potential; and
an interface circuit (38) coupled to receive the first and second regulated supply potentials and first and second input data bus signals at the first level and coupled to provide first and second output data bus signals at the second and third levels independent of the first level.

2. A controller circuit, comprising:
a power supply (34)coupled to receive an input supply level and coupled to provide first and second programmable output supply levels independent of the input supply level; and
a level shifting circuit (40)coupled to receive the first and second programmable output supply levels and first and second input data signals at the input supply level and coupled to provide first and second output data signals at the first and second programmable output supply levels.

3. A dual smartcard controller, comprising:
a power supply multiplexer coupled to provide first and second supply potentials having first and second fault conditions; and
an interface circuit (38) coupled to receive the first and second supply potentials and coupled to provide first and second interface signals, wherein the first interface signals remain active during the second fault condition.

4. A method of operating a smartcard controller, comprising:
regulating simultaneous dual power supply signals at independent programmable levels;
operating a level shifting interface with the simultaneous dual power supply signals;
providing the simultaneous dual power supply signals to first and second external devices; and
facilitating simultaneous communication with the first and second external devices.

5. A method of operating a bi-directional controller interface, comprising:
providing first and second regulated supply potentials at first and second levels;
receiving first data signals at the first level;
shifting the first data signals from the first level to the second level; and
providing second data signals in response to the first data signals at the second level.
